# EUROPÄISCHE PATENTSCHRIFT

(11) **EP 2 359 208 B1**
(45) Veröffentlichungstag und Bekanntmachung des Hinweises auf die Patenterteilung: **08.01.2014**
(21) Anmeldenummer: 09759666.2
(22) Anmeldetag: 07.11.2009
(51) Int. Cl.: G05D 23/13

(54) **MISCHVENTIL FÜR KALT- UND HEISSWASSER**
MIXING VALVE FOR MIXING COLD AND WARM WATER
MITIGEUR DESTINÉ AU MÉLANGE D'EAU FROIDE ET CHAUDE

(30) Priorität: 21.11.2008 DE 102008058515
(43) Veröffentlichungstag der Anmeldung: 24.08.2011
(73) Patentinhaber: Grohe AG, 58675 Hemer (DE)
(72) Erfinder: HUCK, Kai, 58300 Wetter (DE); MIELKE, Achim, 32457 Porta Westfalica (DE); LEMPA, Tanja, 58809 Neuenrade (DE)
(86) Internationale Anmeldenummer: PCT/EP2009/007979
(87) Internationale Veröffentlichungsnummer: WO 2010/057583

(56) Entgegenhaltungen:
- EP-A2- 0 320 564
- EP-A2- 1 335 119
- DE-C1- 19 729 238
- DE-C2- 4 447 893

## Beschreibung

Die vorliegende Erfindung betrifft ein Mischventil für Kalt- und Heißwasser.

Aus der EP 1 423 761 B1 der Anmelderin ist ein Mischventil für Kalt- und Heißwasser bekannt. Das Mischventil für Kalt- und Heißwasser weist eine thermostatische Regelung der Mischwassertemperatur durch einen von einer Temperaturvorwählvorrichtung positionierten, mit einem rohrförmigen Doppelventilsitzschieber verbundenen Thermostaten auf. Der Thermostat ist in einem Gehäuse mit wenigstens je einem Kaltwasser- und einem Heißwassereinlass sowie wenigstens einem Mischwasserauslass angeordnet. Die Einlassquerschnitte an den beiden Einströmspalten des Mischventils sind vom Doppelventilsitzschieber mit seinen beiden Stirnseiten gegensinnig gesteuert. Der Doppelventilsitzschieber hat einen ringförmigen Steg, an dem eine im Durchmesser kleinere Trennhülse ausgebildet ist. Die Trennhülse ist wenigstens mit ihren beiden Endbereichen axial verschieblich in einer Bohrung aufgenommen. Das Kaltwasser und das Heißwasser werden separat jeweils mittels wenigstens einer Öffnung zugeführt. Die Öffnungen im Steg münden in einem ringförmigen Mischkanal. Der Mischkanal durchdringt die Trennhülse radial derart, dass das austretende Mischwasser den Thermostaten gerichtet anströmt. Auf dieses Patent der Anmelderin wird vollinhaltlich Bezug genommen.

Aus der DE 35 27 906 A1 ist eine Schaltungsanordnung zur Positionierung eines Fahrzeugsitzes unter Auswertung von periodischen Stromschwankungen bekannt. Aus der DE 10 2005 037 471 A1, DE 197 29 238 C1 und der DE 10 2005 018 526 A1 ist ein Verfahren zur Positionierung oder Drehzahlmessung einer beweglichen Fensterscheibe in einem Kraftfahrzeug bekannt.

Aus der DE 10 2006 033 352 A1 ist eine sanitäre Unterputzarmatur mit einem Basiskörper und einer elektrisch betriebenen Mischarmatur bekannt. Aus der DE 600 06 928 T2 ist eine Vorrichtung zum Abgeben und Mischen von Wasser bekannt, bei denen die Abgabe im Wesentlichen automatisch durch Sensormittel gesteuert wird, welche die Anwesenheit des Verbrauchers anzeigen. Aus der EP 1 605 327 A2 ist ein sanitäres Thermostatventil bekannt, dass ein Thermostatelement im Gehäuse zur Einstellung einer Solltemperatur des Mischwassers aufweist. Das Thermostatelement wird von einem elektrischen Linearaktuator, der einen Schrittmotor mit mehreren Statorwicklungen und einen Rotor umfasst, beaufschlagt.
Zusätzlich ist aus der DE 44 47 893 C2 eine sanitäre Mischarmatur mit einem Thermostaten bekannt, dessen Einstellung mit Hilfe eines Elektromotors erfolgt. Die tatsächliche Stellung des Elektromotors und somit die Temperatureinstellung des Thermostaten wird dabei über das Zählen der Impulse eines Schrittmotors oder durch Verwendung eines Potentiometers ermittelt.

Der Erfindung liegt die Aufgabe zu Grunde ein Mischventil möglichst zu verbessern.

Diese Aufgabe wird durch eine Schaltung mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist ein Mischventil für Kalt- und Heißwasser mit einer thermostatischen Regelung der Mischwassertemperatur vorgesehen. Das Mischventil weist einen Thermostaten, einen Antrieb und eine elektronische, vorteilhafterweise programmierbare Schaltung auf.

Der Antrieb weist einen mechanisch kommutierten Elektromotor auf, der zur Positionierung des Thermostaten mit dem Thermostat mechanisch gekoppelt ist. Die Schaltung ist zur Steuerung des Elektromotors ausgebildet und mit dem Elektromotor vorzugsweise über Kabel elektrisch verbunden.

Die Schaltung ist zur Bestimmung einer Drehposition des Antriebs aus einer Welligkeit eines Motorstroms ausgebildet. Die Schaltung ist weiterhin zur Steuerung der Mischwassertemperatur anhand der bestimmten Drehposition eingerichtet.

Der Erfindung liegt weiterhin die Aufgabe zu Grunde ein möglichst verbessertes Verfahren anzugeben.

Diese Aufgabe wird durch das Verfahren mit den Merkmalen des unabhängigen Anspruchs 10 gelöst. Vorteilhafte Weiterbildungen sind Gegenstand von abhängigen Ansprüchen und in der Beschreibung enthalten.

Demzufolge ist ein Verfahren zum Betrieb eines Mischventils für Kalt- und Heißwasser mit thermostatischer Regelung der Mischwassertemperatur vorgesehen.

In dem Verfahren wird ein Thermostat mittels eines mechanisch kommutierten Elektromotors eines Antriebs positioniert.

Eine Drehposition des Antriebs wird aus einer Welligkeit des Motorstroms des Elektromotors durch eine Schaltung bestimmt. Die Mischwassertemperatur wird anhand der bestimmten Drehposition gesteuert.

Die im Folgenden beschriebenen Weiterbildungen beziehen sich sowohl auf das Mischventil, als auch auf das Verfahren. Verfahrensmerkmale ergeben sich dabei aus Funktionen der Schaltung und der Mechanik des Mischventils. Funktionen des Mischventils sind aus Verfahrensmerkmalen ableitbar.

Gemäß einer bevorzugten Weiterbildung ist die Schaltung zur Bestimmung der Drehposition mittels eines aktuellen Positionswerts ausgebildet. Die Schaltung ist vorzugsweise zum Addieren oder Subtrahieren gezählter Wellen der Welligkeit des Motorstroms zum/vom aktuellen Positionswert ausgebildet. Das Zählen der Wellen entspricht dabei einem schrittweisen (Inkrement) Erhöhen bzw. Vermindern der Drehposition um einen festen (Winkel-)Wert.

In einer bevorzugten Weiterbildung weist der Antrieb einen mit der Schaltung verbundenen Positionssensor auf. Bevorzugt weist der Antrieb einen dem Positionssensor zugeordneten Geber auf. Beispielsweise ist der Positionssensor ein Schalter und der Geber ein Nocken einer Nockenscheibe oder eines Nockenrings. Alternativ ist der Geber ein Magnet und der Positionssensor ein Hallsensor. Alternativ ist der Positionssensor ein optischer Sensor und der Geber eine optische Scheibe (Lochscheibe, Schlitzscheibe).

Gemäß einer besonders bevorzugten Weiterbildung sind der Geber und der Positionssensor ausgebildet ein für eine vorbestimmte Mischwassertemperatur charakteristisches Signal zu erzeugen. Bevorzugt erzeugen der Geber und der Positionssensor genau ein charakteristisches Signal für genau eine vorteilhafterweise geeichte Mischwassertemperatur.

Vorzugsweise ist die Schaltung ausgebildet die aus der Welligkeit des Motorstroms bestimmte Drehposition anhand des charakteristischen Signals der vorbestimmten Mischwassertemperatur zuzuordnen. Zur Zuordnung der Drehposition zur vorbestimmten Mischwassertemperatur wird ein aktueller Positionswert vorteilhafterweise auf einen vorbestimmten Wert gesetzt.

Gemäß einer bevorzugten Weiterbildung weist der Geber für die vorbestimmte Mischwassertemperatur ein Signalerzeugungselement zur Erzeugung des charakteristischen Signals für die Mischwassertemperatur auf. Das Signalerzeugungselement weist beispielsweise eine dem charakteristischen Signal zugeordnete Winkelbreite auf. Beispielsweise ist ein Schlitz definierter Breite als Signalerzeugungselement einer optischen Lochscheibe vorgesehen. Vorzugsweise weist der Geber in bekannten Abständen zum Signalerzeugungselement weitere Elemente zur Signalerzeugung auf. Vorzugsweise sind die weiteren Elemente zur Signalerzeugung zueinander äquidistant angeordnet und bilden zusammen einen Inkrementalgeber über zumindest einen Teilbereich des (Dreh-) Verstellweges. Beispielsweise sind auf einer optischen Scheibe Schlitze in äquidistanten Abschnitten angeordnet. Bevorzugt ist die Schaltung ausgebildet, die mittels der Welligkeit des Motorstroms bestimmte aktuelle Position anhand der Signale der weiteren Elemente zur Signalerzeugung zu korrigieren.

Gemäß einer vorteilhaften Weiterbildung sind der Geber und der Sensor ausgebildet ein für eine Stellwegbegrenzung charakteristisches Signal zu erzeugen. Vorzugsweise ist die Schaltung ausgebildet den Elektromotor anhand des für die Stellwegbegrenzung charakteristischen Signals zu stoppen.

In einer vorteilhaften Ausgestaltung ist der Positionssensor als Schalter ausgebildet. Der Schalter ist beispielsweise ein Wechselschalter, ein Schließer oder Öffner. Auch ein Taster ist dabei als Schalter zu verstehen. Vorzugsweise ist der Geber als insbesondere abtriebsseitig vom Antrieb bewegtes Nockenelement ausgebildet. Beispielsweise ist das Nockenelement eine Nockenwelle, Nockenscheibe oder ein Nockenring. Die Nocken des Nockenelements sind zur Betätigung des Schalters positioniert.

Gemäß einer vorteilhaften Weiterbildung ist vorgesehen, dass der Antrieb und der Thermostat lösbar mechanisch koppelbar sind. Vorzugsweise weist das Mischventil eine Kupplung zur mechanischen Kopplung auf. Vor der mechanischen Kopplung des Antriebs und des Thermostats wird vorzugsweise ein Geber durch den Antrieb in eine Soll-Position zu einem Positionssensor bewegt. Zudem wird der Thermostat in eine Position für eine vorbestimmte Mischwassertemperatur bewegt. Beispielsweise wird die Mischwassertemperatur gemessen und die Position des Thermostats solange händisch verstellt, bis eine gewünschte Mischwassertemperatur eingestellt ist. Hierdurch wird bewirkt, dass die Position des Thermostaten der Soll-Position des Gebers nach der mechanischen Kopplung zugeordnet ist.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert.

Dabei zeigen
- Fig. 1: eine schematische Ansicht eines Antriebs und einer Schaltung, und
- Fig. 2: eine schematische dreidimensionale Ansicht eines Nockenrings,
- Fig. 3: eine schematische dreidimensionale Ansicht eines Übertragungselements,
- Fig. 4: eine schematische Explosionsdarstellung eines Antriebs,
- Fig. 5: eine schematische Schnittansicht eines Teils eines Mischventils,
- Fig. 6a: eine schematische dreidimensionale Ansicht eines Antriebs, und
- Fig. 6b: eine schematische Detailansicht eines optischen Gebers.

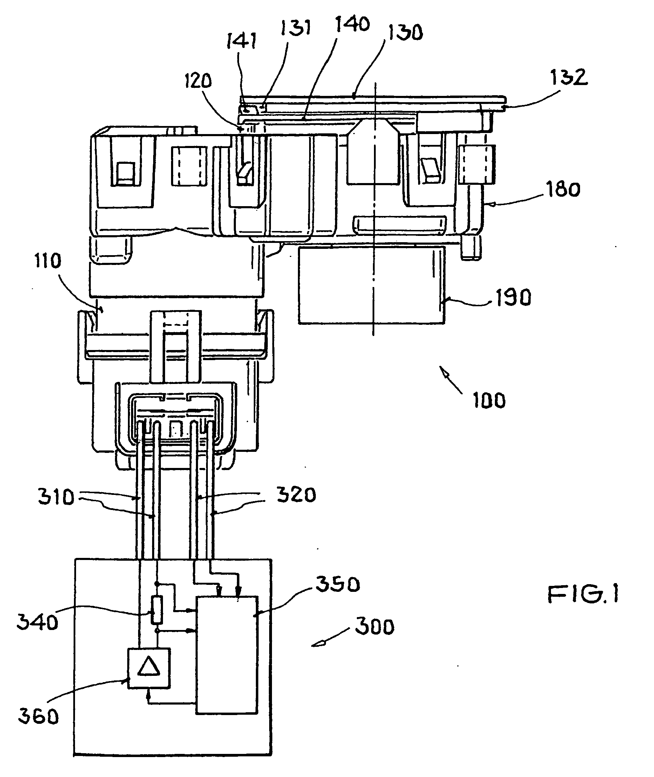

In Fig. 1 ist eine schematische Ansicht eines Antriebs 100 und einer Schaltung 300 eines Mischventils dargestellt. Der Antrieb 100 weist einen mechanisch kommutierten Elektromotor 110 auf, der über ein Getriebe in einem Getriebegehäuse 180 auf die Kupplung 190 wirkt. Mit der Kupplung ist ein Nockenring 130 mit Nocken 131 und 132 drehfest verbunden. Die Nocken 131, 132 des Nockenrings 130 betätigen über ein Übertragungselement 140 einen Schalter 120. Der Stößel des Schalters 120 wird dabei betätigt, indem ein Nocken 131, 132 des Nockenrings 130 eine federnd gelagerte Erhöhung 141 des Übertragungselementes beim Überfahren in axialer Richtung auf den Schalter 120 drückt. Der Schalter 120 kann beispielsweise als Umschalter, Öffner oder Schließer ausgebildet sein.

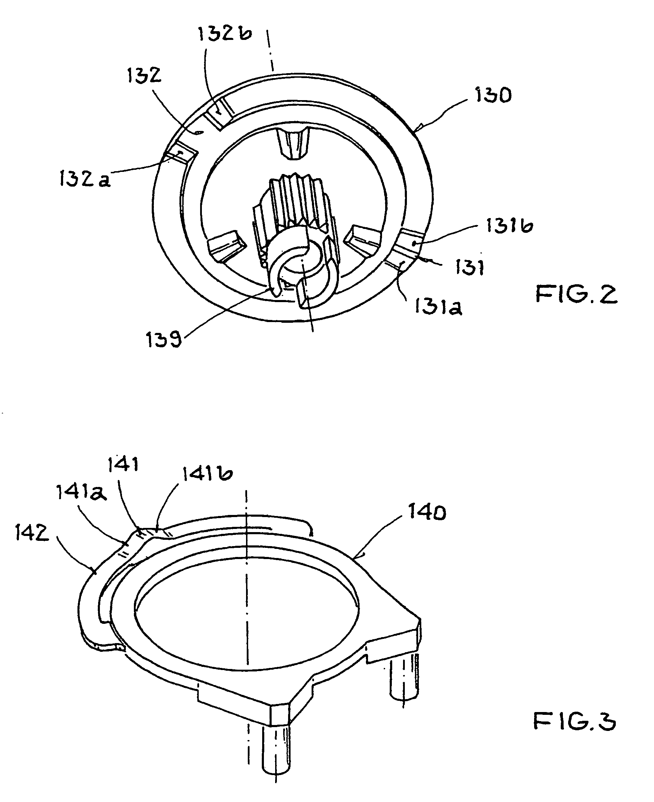

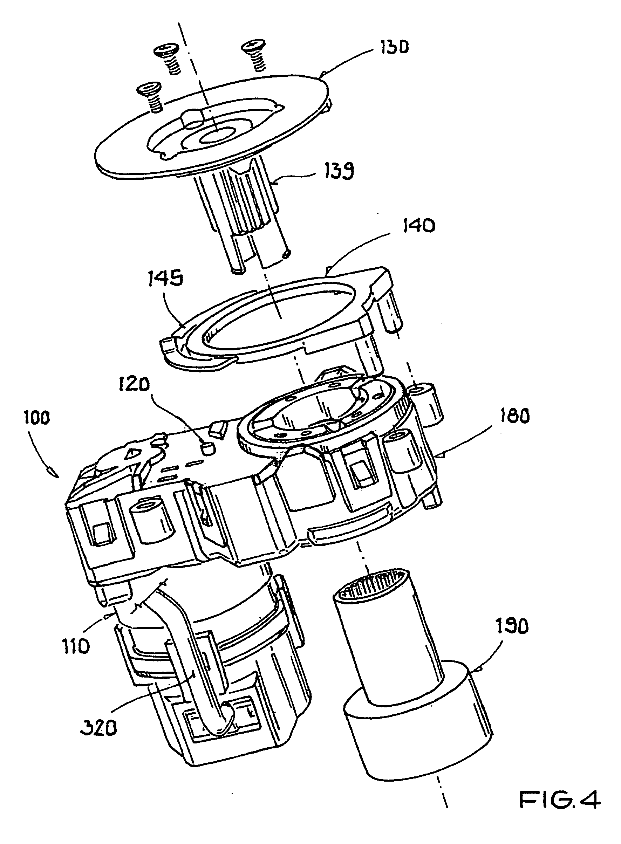

Der Nockenring 130 ist in einer dreidimensionalen Ansicht in Fig. 2 schematisch dargestellt. Der Nockenring 130 weist einen schmalen Nocken 131 und einen breiten Nocken 132 auf. Beide Nocken 131, 132 weisen entsprechende Flanken 131a, 131b beziehungsweise 132a, 132b auf, die mit der federnd gelagerten Erhöhung 141 des Übertragungselements 140 zusammenwirken. Das Übertragungselement 140 mit einem Federelement 145 und der Erhöhung 141 mit ihren Flanken 141a, 141b ist in Fig. 3 dargestellt. Das Übertragungselement 141 ist dabei drehfest am Getriebegehäuse 180 und damit ortsfest zum Schalter 120 befestigt. Hingegen wird der Nockenring 130 abtriebsseitig mitgedreht, so dass die Nocken 131, 132 relativ zur Erhöhung 141 des Übertragungselements 140 in radialer Richtung verstellt werden. Der Nockenring 130 weist weiterhin eine Welle 139 mit Außenverzahnung auf, die eine drehfeste Kopplung des Nockenrings 130 mit einer Abtriebswelle (190, Fig. 4) oder einem Getriebeelement ermöglicht.

In Fig. 1 ist weiterhin eine Schaltung 300 schematisch dargestellt, die mit dem Elektromotor 110 des Antriebs 100 über Kabel 310 verbunden ist. Die Schaltung 300 ist zur Steuerung des Elektromotors 110 ausgebildet. Hierzu weist die Schaltung 300 einen Leistungsschalter 360, beispielsweise ein Relais oder einen Halbleiterschalter auf, so dass der Elektromotor 110 über die Kabel 310 bestromt werden kann. Die Schaltung 300 weist eine Mess-Steuer-Vorrichtung 350 - beispielweise einen Mikrocontroller - auf, mittels derer der Leistungsschalter 360 angesteuert wird.

Die Schaltung 300 ist zudem ausgebildet, eine Drehposition des Antriebs 100 aus einer Welligkeit eines Motorstroms zu bestimmen. Hierzu weist die Schaltung 300 einen Shunt 340 auf, der mit einem Messeingang der Mess-Steuer-Vorrichtung 350 verbunden ist. Die Schaltung 300 ist eingerichtet mittels der bestimmten Drehposition die Mischwassertemperatur zu steuern. Beispielsweise ist eine Eingabevorrichtung (nicht dargestellt) vorgesehen, mittels derer eine Mischwassertemperatur (beispielsweise 35°C) in die Mess-Steuer-Vorrichtung 350 eingegeben werden kann. Hierzu sind beispielsweise Tasten oder ein Drehregler vorgesehen (nicht dargestellt). Der gewählten Mischwassertemperatur wird dabei von der Mess-Steuer-Vorrichtung 350 eine Drehposition zugeordnet. Der Elektromotor 110 wird für eine Drehbewegung in Richtung zur zugeordneten Drehposition mittels des Leistungsschalters 360 bestromt.

Während der Drehbewegung des Elektromotors 110 wird die Welligkeit des Motorstroms durch den Elektromotor 110 zur Bestimmung der aktuellen Position genutzt. Jeder Welle wird dabei in Abhängigkeit von der Anzahl der Kommutatorlamellen des Elektromotors 110 ein Drehwinkel zugeordnet. Dabei kann der aktuelle Positionswert durch Addieren oder Subtrahieren gezählter Wellen der Welligkeit des Motorstroms bestimmt werden. Mit oder kurz vor einem Erreichen der der gewünschten Mischwassertemperatur zugeordneten Drehposition wird der Elektromotor 110 durch die Mess-Steuer-Vorrichtung 350 gestoppt, in dem die Mess-Steuer-Vorrichtung 350 den Leistungsschalter 360 entsprechend steuert.

Vor einem Koppeln des Antriebs 100 mit einer Mischmechanik über die Kupplung 190 wird der Nockenring 130 bevorzugt automatisch in eine Normierungsposition verfahren, wobei in der Normierungsposition der Nocken 131 den Schalter 120 betätigt. Der Nocken 131 kann dabei von dem Nocken 132 durch die unterschiedlichen Breiten der Nocken unterschieden werden. Hierzu steuert die Mess-Steuer-Vorrichtung 350 ein Überfahren des Nockens und bestimmt die Breite des Nockens 131, 132 anhand der Dauer der Betätigung des Schalters 130. Hierzu ist die Schaltung 300 über die Kabel 320 mit dem Schalter 120 verbunden. Beispielsweise wird die Dauer der Betätigung des Schalters 130 mit einem Schwellwert verglichen. Danach steuert die Mess-Steuer-Vorrichtung 350 den Antrieb 100 auf die Drehposition des schmalen Nockens 131.

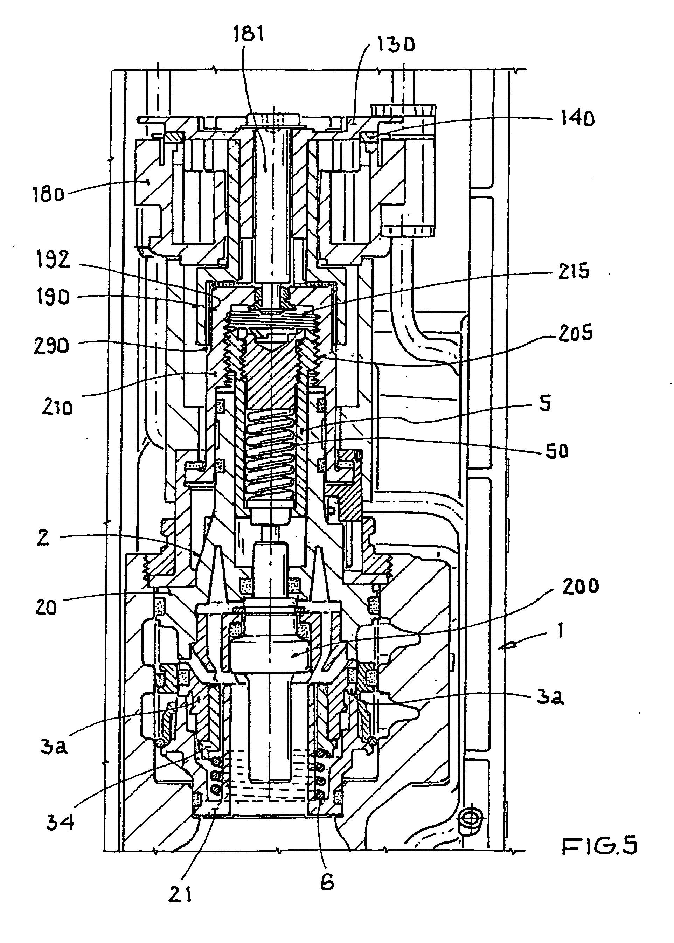

Die Mischmechanik wird nun durch Einstellung der Position eines Thermostaten (200, Fig. 5) für die zugehörige Mischtemperatur - beispielsweise 38°C - mittels Messen der Mischtemperatur justiert. Beim erneuten Überfahren diese Drehposition erzeugt der Nocken 131 durch Betätigung des Schalters 120 einen Schaltimpuls charakteristischer Dauer, der der zugehörigen Mischtemperatur zugeordnet ist.

Ein aus der Welligkeit ermittelter aktueller Positionswert der Drehposition ist meist fehlerbehaftet, weicht also von der realen Drehposition ab. Fehler können dabei beispielsweise durch doppelt auftretende oder ausbleibende Wellen erzeugt werden. Der Fehler nimmt meist mit der Anzahl der Verstellungen zu.

Die Schaltung 300 gemäß Fig. 1 ist ausgebildet und eingerichtet die aus der Welligkeit des Motorstroms bestimmte Drehposition anhand des charakteristischen Signals der vorbestimmten Mischwassertemperatur zuzuordnen. Mit Erkennung des Nockens 131 aus der Dauer der Betätigung des Schalters 120 ist ebenfalls die reale Drehposition bekannt, so dass der realen Drehposition ein aktueller Positionswert zugeordnet werden kann. Beispielsweise wird der aktuelle Positionswert durch einen fest gespeicherten, vorbestimmten Wert überschrieben. Dies kann auch als Normierung bezeichnet werden.

Vorteilhafterweise wird dabei vor einer Freigabe eines - beispielweise durch andere Ventile gesteuerten - Wasserflusses durch das Mischventil die Drehposition des schmalen Nockens 131 durch eine Steuerung des Antriebs 100 durch die Mess-Steuer-Vorrichtung 350 überfahren und unmittelbar danach die gewählte Mischtemperatur durch Ansteuerung des Antriebs 100 durch die Mess-Steuer-Vorrichtung 350 gestellt. Nach dem Abschalten des Wasserflusses durch das Mischventil wird die Drehposition des schmalen Nockens 131 erneut überfahren und die Position des schmalen Nockens 131 direkt neben der Erhöhung 141 des Übertragungselements 140 gestellt um den Nocken 131 und die Erhöhung 141 zu entlasten und dennoch ein schnelles Anfahren der Drehposition für die gewählten Mischtemperatur zu ermöglichen.

Der breitere Nocken 132 erzeugt beim Überfahren des Schalters 120 ebenfalls ein charakteristisches Signal, das eine Stellwegbegrenzung bewirkt. Hierzu erkennt die Mess-Steuer-Vorrichtung 350 anhand der Dauer der Betätigung des Schalters 120 das Überfahren des breiten Nockens 132 und stoppt den Elektromotor 110 in Abhängigkeit von dem für die Stellwegbegrenzung charakteristischen Signal. Hierdurch wird der Vorteil erzielt, dass die Mechanik des Mischventils nicht in eine mechanische Begrenzung (Anschlag) verfahren wird, die zu einer Beschädigung des Elektromotors 110 oder des Getriebes führen könnte.

In Fig. 4 ist eine Explosionsdarstellung des Antriebs 100 schematisch dargestellt. Das Getriebegehäuse 180 weist eine Öffnung auf, durch die im montierten Zustand die Welle 139 des Nockenrings 130 hindurch in die Kupplung 190 ragt und mit dieser durch eine Innen-/Außenverzahnung drehfest verbunden ist. Der Nockenring 130 ist mittels Schrauben abtriebsseitig an einem Getriebeelement (nicht dargestellt) befestigt. Hingegen ist das Übertragungselement 140 drehfest am Getriebegehäuse 180 befestigt.

Das in Figur 5 schematisch dargestellte thermostatisch geregelte Mischventil weist ein Gehäuse 1 auf, in dem in einer Bohrung 13 ein Ventileinsatz 2 angeordnet ist. Der Ventileinsatz 2 ist von einem becherförmigen Kopfstück 20 und einem Deckel 21 zu einer Baueinheit ausgebildet. In dem Ventileinsatz 2 ist ein Doppelventilsitzschieber 3a axial begrenzt verschiebbar angeordnet. Koaxial zum Doppelventilsitzschieber 3a ist ein Thermostat 200 vorgesehen, der mit einer Stirnseite axial an drei symmetrisch angeordneten Führungs- und Anschlagnasen des Doppelventilsitzschiebers 3a axial abgestützt ist. Der Thermostat 200 ist mit dem Antrieb 100 mit dem mechanisch kommutierten Elektromotor 110 aus Fig. 1 zur axialen Positionierung des Thermostaten 200 mechanisch gekoppelt.

An einer inneren Stirnseite des Deckels 21 ist eine Rückstellfeder 6 einerseits und andererseits über ein Zwischenstück 34 an einer Schulter des Doppelventilsitzschiebers 3a abgestützt, so dass die Rückstellfeder 6 über den Doppelventilsitzschieber 3a den Thermostaten 200 in Richtung auf das Kopfstück 20 drückt. Der Thermostat 200 ist mit einem Dichtring gedichtet aus dem Kopfstück 20 herausgeführt und liegt mit einem in Abhängigkeit von der Mischwassertemperatur axial auslenkbaren Stößel an einer Überlastfeder 50 einer Stellschraube 5 an. Die Stellschraube 5 ist unverdrehbar axial begrenzt verschiebbar in dem Kopfstück 20 angeordnet, wobei am äußeren Endbereich ein Bewegungsgewinde 205 ausgebildet ist. Mit dem Bewegungsgewinde 205 ist eine Hülse 210 mit Innengewinde 215 in Eingriff, so dass durch eine Drehbewegung der Hülse 210 die Stellschraube 5 axial in Richtung von und zum Kopfstück 20 bewegbar ist. Diese Axialbewegung wird von dem Stößel auf den Thermostaten 200 und den Doppelventilsitzschieber 3a übertragen, so dass hierdurch eine Sollwerttemperatur des Mischwassers einstellbar ist.

Um die Stellschraube 5 mittels des Antriebs 100 für Änderung der Position des Thermostaten 200 axial zu verstellen ist die Hülse 210 mit dem Antrieb 100 gekoppelt. Vom Antrieb 100 ist in Fig. 5 das Getriebegehäuse 180 mit dem Getriebe dargestellt. Eine Welle 181 verbindet den Nockenring 130 mit der Hülse 210 in axialer Richtung.

Zur Übertragung der Kraft von dem Getriebe auf die Hülse 210 ist eine Kupplung 190 vorgesehen. Die Kupplung 190 des Ausführungsbeispiels der Fig. 5 weist eine Innen liegende Riffelverzahnung / Längsverzahnung 192 auf. Die Längsverzahnung 192 der Kupplung 190 greift in eine korrespondierende, Außen liegende Längsverzahnung 290 der Hülse 210.

Eine durch den Elektromotor 110 erzeugte Drehbewegung des Getriebes des Antriebs 100 wird über die Kupplung 190 auf die Hülse 210 übertragen. Die Drehbewegung der Hülse 210 führt wiederum zu einer axialen Verstellung der Stellschraube 5, die den Thermostaten 200 wiederum in axialer Richtung verstellt. Weitere Details des Mischventils aus der Fig. 5 sind der EP 1 423 761 B1 zu entnehmen.

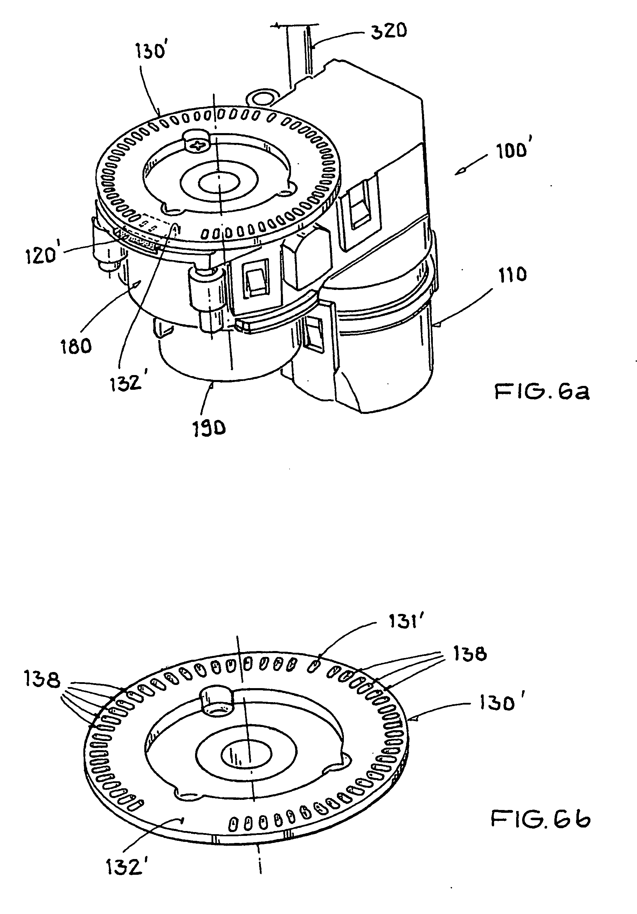

In Fig. 6a ist ein anderes Ausführungsbeispiel eines Antriebs als schematische dreidimensionale Ansicht dargestellt. Als Geber-SensorSystem wird eine Reflexions-Lichtschranke verwendet. Die Reflexionen sind dabei von einem optischen Geber 130' mit Schlitzen 131', 138 bewirkt. Die Schlitzen sind dabei am äußeren Umfang einer Scheibe 130' angeordnet. Ein optischer Sensor 120' mit Lichtquelle ist zur Positionserkennung mit der Schaltung (nicht dargestellt) verbunden.

In Fig. 6b ist ein Ausschnitt des optischen Gebers 130' schematisch dargestellt. Der Schlitz 130' ist für eine vorbestimmte Mischwassertemperatur als Signalerzeugungselement zur Erzeugung eines charakteristischen Signals für die Mischwassertemperatur vorgesehen. Weiterhin sind weitere Schlitze 138 als Elemente zur Signalerzeugung vorgesehen, die voneinander äquidistant beabstandet sind. Diese weiteren Schlitze 138 bilden dabei einen Inkrementalgeber über einen Teil des rotatorischen Verstellweges. Der Schlitz 130' für eine vorbestimmte Mischwassertemperatur ist von den weiteren Elementen 138 durch einen größeren Abstand beabstandet, so dass durch die Schaltung dieser Schlitz von den weiteren Elementen 138 unterscheidbar ist. Weiterhin ist in Fig. 6a ein Teilbereich 132' dargestellt, der keine Schlitze aufweist und der Verstellwegbegrenzung dient.

Die Erfindung ist nicht auf die dargestellten Ausgestaltungsvarianten der Figuren 1 bis 5 beschränkt. Beispielsweise ist es möglich einen anderen Geber, beispielsweise eine magnetische (magnetisierte oder magnetisch leitfähige) Scheibe und einen magnetischen Sensor (Hallsensor, induktiver Näherungsschalter) zu verwenden. Auch ist es möglich die Nocken des Nockenrings 130 anders auszubilden. Beispielsweise könnte die Normierungsposition für eine geeichte Mischtemperatur zwischen zwei schmalen Nocken vorgesehen sein.

### Bezugszeichenliste

- 1: Gehäuse
- 2: Ventileinsatz
- 3a: Doppelventilsitzschieber
- 5: Stellschraube
- 6: Rückstellfeder
- 20: Kopfstück
- 21: Deckel
- 34: Zwischenstück
- 50: Überlastfeder
- 100: Antrieb
- 110: Elektromotor
- 120: Schalter
- 120': optischer Sensor
- 130: Nockenring
- 130': optische Scheibe
- 131, 132: Nocken
- 131a, 131b, 132a, 132b: Flanken
- 131', 138: Schlitze
- 132': Teilbereich
- 139: Welle
- 140: Übertragungselement
- 141: Erhöhung
- 141a, 141b: Flanken
- 145: Felderelement
- 180: Getriebegehäuse
- 181: Welle
- 190: Kupplung
- 192: Innenverzahnung
- 200: Thermostat
- 205: Schraubengewinde
- 210: Hülse
- 215: Schraubeninnengewinde
- 290: Außenverzahnung
- 300: Schaltung
- 310, 320: Kabel
- 340: Shunt
- 350: Mess-Steuer-Vorrichtung
- 360: Leistungsschalter

## Patentansprüche

1. Mischventil für Kalt- und Heißwasser mit thermostatischer Regelung der Mischwassertemperatur,
- mit einem Thermostaten (200),
- mit einem Antrieb (100) mit einem mechanisch kommutierten Elektromotor (110), der zur Positionierung des Thermostaten (200) mit dem Thermostat (200) mechanisch gekoppelt ist, und
- mit einer Schaltung (300) zur Steuerung des Elektromotors (110),
- bei dem die Schaltung (300) zur Bestimmung einer Welligkeit eines Motorstroms einen Shunt (340) aufweist und dazu ausgebildet ist, eine Drehposition des Antriebs (100) aus der Welligkeit des Motorstroms zu bestimmen und anhand der bestimmten Drehposition die Mischwassertemperatur zu steuern.

2. Mischventil nach Anspruch 1,
- bei dem die Schaltung (300) ausgebildet ist die Drehposition mittels eines aktuellen Positionswerts durch Addieren oder Subtrahieren gezählter Wellen der Welligkeit des Motorstroms zu bestimmen.

3. Mischventil nach einem der vorhergehenden Ansprüche,
- bei dem der Antrieb (100) einen mit der Schaltung (300) verbundenen Positionssensor (120) aufweist,
- bei dem der Antrieb (100) einen dem Positionssensor (120) zugeordneten Geber (130) aufweist.

4. Mischventil nach Anspruch 3,
- bei dem der Geber (130) und der Positionssensor (120) ausgebildet sind ein für eine vorbestimmte Mischwassertemperatur charakteristisches Signal zu erzeugen.

5. Mischventil nach Anspruch 4,
- bei dem die Schaltung (300) ausgebildet ist die aus der Welligkeit des Motorstroms bestimmte Drehposition anhand des charakteristischen Signals der vorbestimmten Mischwassertemperatur zuzuordnen.

6. Mischventil nach Anspruch 5,
- bei dem die Schaltung (300) ausgebildet ist zur Zuordnung der Drehposition zur vorbestimmten Mischwassertemperatur einen aktuellen Positionswert auf einen vorbestimmten Wert zu setzen.

7. Mischventil nach einem der Ansprüche 3 bis 6,
- bei dem der Geber für die vorbestimmte Mischwassertemperatur ein Signalerzeugungselement zur Erzeugung des charakteristischen Signals für die Mischwassertemperatur aufweist, und
- bei dem der Geber in bekannten Abständen zum Signalerzeugungselement weitere Elemente zur Signalerzeugung aufweist.

8. Mischventil nach einem der Ansprüche 3 bis 7,
- bei dem der Geber (130) und der Sensor (120) ausgebildet sind ein für eine Stellwegbegrenzung charakteristisches Signal zu erzeugen, und
- bei dem die Schaltung (300) ausgebildet ist den Elektromotor (110) anhand des für die Stellwegbegrenzung charakteristischen Signals zu stoppen.

9. Mischventil nach einem der Ansprüche 3 bis 7,
- bei der der Positionssensor als Schalter (120) ausgebildet ist,
- bei der der Geber als insbesondere abtriebsseitig vom Antrieb (100) bewegtes Nockenelement (130) ausgebildet ist, dessen Nocken (131, 132) zur Betätigung des Schalters (120) positioniert sind.

10. Verfahren zum Betrieb eines Mischventils für Kalt- und Heißwasser mit thermostatischer Regelung der Mischwassertemperatur,
- bei dem ein Thermostat (200) mittels eines mechanisch kommutierten Elektromotors (110) eines Antriebs (100) positioniert wird,
- bei dem eine Drehposition des Antriebs (100) aus einer Welligkeit des Motorstroms des Elektromotors (110) durch eine Schaltung (300), die einen Shunt (340) zur Bestimmung der Welligkeit des Motorstroms aufweist, bestimmt wird, um die Mischwassertemperatur anhand der bestimmten Drehposition zu steuern.

11. Verfahren nach Anspruch 10,
wobei vor einer mechanischen Kopplung des Antriebs (100) und des Thermostats (200)
- ein Geber (130) durch den Antrieb (100) in eine Soll-Position zu einem Positionssensor (120) bewegt wird,
- der Thermostat (200) in eine Position für eine vorbestimmte Mischwassertemperatur bewegt wird, so dass die Position des Thermostaten (200) der Soll-Position des Gebers (130) zugeordnet wird.

## Claims

1. Mixer valve for cold and hot water having thermostatic control of the mixed-water temperature,
- having a thermostat (200),
- having a drive means (100) with a mechanically commutated electric motor (110) which, for positioning of the thermostat (200), is mechanically coupled to the thermostat (200), and
- having a circuit (300) for controlling the electric motor (110),
- wherein for determining a ripple of a motor current the circuit (300) has a shunt (340) and is arranged to determine a rotated position of the drive means (100) from the ripple of the motor current and to control the mixed-water temperature on the basis of the rotated position determined.

2. Mixer valve according to claim 1,
- wherein the circuit (300) is arranged to determine the rotated position by means of an actual position value by addition or subtraction of counted waves of the ripple of the motor current.

3. Mixer valve according to either one of the preceding claims,
- wherein the drive means (100) has a position sensor (120) connected to the circuit (300),
- wherein the drive means (100) has a transmitter (130) associated with the position sensor (120).

4. Mixer valve according to claim 3,
- wherein the transmitter (130) and the position sensor (120) are arranged to generate a signal that is characteristic of a predetermined mixed-water temperature.

5. Mixer valve according to claim 4,
- wherein the circuit (300) is arranged to assign the rotated position determined from the ripple of the motor current to the predetermined mixed-water temperature on the basis of the characteristic signal.

6. Mixer valve according to claim 5,
- wherein for assigning the rotated position to the predetermined mixed-water temperature, the circuit (300) is arranged to adjust an actual position value to a predetermined value.

7. Mixer valve according to any one of claims 3 to 6,
- wherein the transmitter for the predetermined mixed-water temperature has a signal-generation element for generating the characteristic signal for the mixed-water temperature, and
- wherein the transmitter has further elements for signal generation at known distances from the signal-generation element.

8. Mixer valve according to any one of claims 3 to 7,
- wherein the transmitter (130) and the sensor (120) are arranged to generate a signal that is characteristic of a limitation of travel, and
- wherein the circuit (300) is arranged to stop the electric motor (110) on the basis of the signal that is characteristic of the limitation of travel.

9. Mixer valve according to any one of claims 3 to 7,
- wherein the position sensor is in the form of a switch (120),
- wherein the transmitter is in the form of a cam element (130) moved, especially on the output side, by the drive means (100), the cams (131, 132) of which are positioned for operation of the switch (120).

10. Method of operating a mixer valve for cold and hot water having thermostatic control of the mixed-water temperature,
- wherein a thermostat (200) is positioned by means of a mechanically commutated electric motor (110) of a drive means (100),
- wherein a rotated position of the drive means (100) is determined from a ripple of the motor current of the electric motor (110) by a circuit (300) which has a shunt (340) for determining the ripple of the motor current, in order to control the mixed-water temperature on the basis of the rotated position determined.

11. Method according to claim 10,
wherein prior to mechanical coupling of the drive means (100) and the thermostat (200),
- a transmitter (130) is moved by the drive means (100) into a desired position relative to a position sensor (120),
- the thermostat (200) is moved into a position for a predetermined mixed-water temperature so that the position of the thermostat (200) is assigned to the desired position of the transmitter (130).

## Revendications

1. Mitigeur destiné au mélange d'eau froide et d'eau chaude avec régulation thermostatique de la température de l'eau mélangée comportant :
- un thermostat (200),
- un élément d'entrainement (100) muni d'un moteur électrique (110) à commutation mécanique qui est couplé mécaniquement au thermostat (200) pour permettre le positionnement de ce thermostat (200), et
- un circuit (300) de commande du moteur électrique (110),
- dans lequel le circuit (300) comporte un shunt (340) pour permettre de déterminer l'ondulation du courant moteur, et est réalisé pour déterminer la position de rotation de l'élément d'entraînement (100) à partir de l'ondulation du courant moteur et, commander la température de l'eau mélangée à partir de la position de rotation déterminée.

2. Mitigeur conforme à la revendication 1, dans lequel le circuit (300) est réalisé pour déterminer la position de rotation au moyen d'une valeur de position actuelle par addition ou soustraction d'ondes comptées de l'ondulation du courant moteur.

3. Mitigeur conforme à l'une des revendications précédentes, dans lequel
l'élément d'entrainement (100) comporte un capteur de position (120) relié au circuit (300),
l'élément d'entrainement (100) comporte un émetteur (130) associé au capteur de position (120).

4. Mitigeur conforme à la revendication 3, dans lequel l'émetteur (130) et le capteur de position (120) sont réalisés pour produire un signal caractéristique d'une température de l'eau mélangée prédéfinie.

5. Mitigeur conforme à la revendication 4, dans lequel le circuit (300) est réalisé pour associer, la position de rotation déterminée à partir de l'ondulation du courant moteur à la température de l'eau mélangée prédéfinie à l'aide du signal caractéristique.

6. Mitigeur conforme à la revendication 5, dans lequel le circuit (300) est réalisé pour fixer une valeur de position actuelle à une valeur prédéfinie pour permettre d'associer la position de réglage à une température de l'eau mélangée prédéfinie.

7. Mitigeur conforme à l'une des revendications 3 à 6, dans lequel :
- l'émetteur pour la température prédéfinie de l'eau mélangée comporte un élément de génération de signal permettant de produire le signal caractéristique de la température de l'eau mélangée, et
- l'émetteur comporte d'autres éléments de génération de signal situés à des distances connues de l'élément de génération de signal.

8. Mitigeur conforme à l'une des revendications 3 à 7, dans lequel :
- l'émetteur (130) et le capteur (120) sont réalisés pour produire un signal caractéristique d'une limitation de la course de réglage, et
- le circuit (300) est réalisé pour arrêter le moteur électrique (110) à l'aide du signal caractéristique pour la limitation de la course de réglage.

9. Mitigeur conforme à l'une des revendications 3 à 7, dans lequel :
- le capteur de position est réalisé sous la forme d'un commutateur (120), et
- l'émetteur est réalisé sous la forme d'un élément à cames (130) déplacé par l'élément d'entrainement (100) en particulier côté sortie dont les cames (131, 132) sont positionnées pour permettre l'actionnement du commutateur (120).

10. Procédé d'actionnement d'un mitigeur destiné au mélange d'eau chaude et d'eau froide comportant une régulation thermostatique de la température selon lequel :
- un thermostat (200) est positionné au moyen d'un moteur électrique (110) à commutation mécanique d'un élément d'entrainement (100), et
- la position de rotation de l'élément d'entrainement (100) est déterminée à partir de l'ondulation du moteur électrique (110) par un circuit (300) qui comporte un shunt (340) pour permettre de déterminer l'ondulation du courant du moteur, pour permettre de commander la température de l'eau mélangée à l'aide de la position déterminée.

11. Procédé conforme à la revendication 10, selon lequel un accouplement mécanique de l'élément d'entrainement (100) et du thermostat (200) permet :
- de déplacer un émetteur (130) par l'élément d'entrainement (100) dans une position de consigne par rapport à un capteur de position (120), et
- de déplacer le thermostat (200) dans une position correspondant à une température de l'eau mélangée prédéfinie de sorte que la position du thermostat (200) soit associée à la position de consigne de l'émetteur (130).
